# EUROPÄISCHE PATENTSCHRIFT

(11) **EP 3 953 225 B1**
(45) Veröffentlichungstag und Bekanntmachung des Hinweises auf die Patenterteilung: **11.10.2023**
(21) Anmeldenummer: 20719161.0
(22) Anmeldetag: 09.04.2020
(51) Int. Cl.: B60T 17/04, B60T 11/04

(54) **MONTAGEKLAMMER UND FESTSTELLBREMSE**
ASSEMBLY CLIP AND PARKING BRAKE
SUPPORT DE FIXATION ET FREIN DE STATIONNEMENT

(30) Priorität: 12.04.2019 DE 102019205361
(43) Veröffentlichungstag der Anmeldung: 16.02.2022
(73) Patentinhaber: VOLKSWAGEN AKTIENGESELLSCHAFT, 38440 Wolfsburg (DE); LISI Automotive KKP GmbH & Co.KG, 97638 Mellrichstadt (DE)
(72) Erfinder: BURMESTER, Steffen, 38448 Wolfsburg-Warmenau (DE); GLUTH, Patrick, 97638 Mellrichstadt (DE)
(74) Vertreter: Bals & Vogel Patentanwälte PartGmbB
(86) Internationale Anmeldenummer: PCT/EP2020/060219
(87) Internationale Veröffentlichungsnummer: WO 2020/208170

(56) Entgegenhaltungen:
- WO-A1-2013/034842
- JP-A- S5 861 050
- KR-A- 20120 012 138
- US-B1- 6 257 530

## Beschreibung

Die Erfindung betrifft eine Montageklammer zur mittelbaren Befestigung eines Seiles einer Feststellbremse an einem Bauteil eines Kraftfahrzeuges, eine Feststellbremse und ein Kraftfahrzeug.

Ein von der erfindungsgemäßen Montageklammer umfasstes technisches Einsatzgebiet ist eine Feststellbremse, insbesondere eine handbetätigte Feststellbremse oder auch Handbremse. Über Feststellbremsen verfügen beispielsweise Kraftfahrzeuge. Gleichermaßen kann die Erfindung aber auch für Feststellbremsen anderer Maschinen, beispielsweise Eisenbahnen oder Flugzeuge, eingesetzt werden. Ebenso kann die erfindungsgemäße Montageklammer auf anderen technischen Einsatzgebieten eingesetzt werden, in denen ein Seil, ein Kabel, das beispielsweise stromführend ist, oder ein anderes längliches, insbesondere elastisches, Element aufgenommen werden und insbesondere flexibel an einem Bauteil befestigt werden kann.

Bei der Festlegung von Seilen einer Feststellbremse an einem Unterboden des Fahrzeuges im Bereich der Achse, insbesondere der Hinterachse, müssen die Bewegungen der Achse und der Bremssattel, mit der das Seil wirkverbunden ist, berücksichtigt werden. Wünschenswert ist eine möglichst flexible Festlegung, die eine Beweglichkeit des Seiles erlaubt, die den Bewegungen der Achse und der Bremsbacke folgen kann. Darüber hinaus besteht am Unterboden des Kraftfahrzeuges die Gefahr von Steinschlägen, aufgrund derer sich das Seil nicht aus seiner Festlegung lösen darf. Wünschenswert ist darüber hinaus eine möglichst einfache und kostengünstige Festlegung des Seiles an dem Unterboden des Kraftfahrzeuges.

Handbremsvorrichtungen für Kraftfahrzeuge werden beispielsweise in der DE 40 23 047 C2 und der JP S58 61050 A beschrieben. Ein Seilzug der Handbremsvorrichtung wird über einen an einer Querstrebe des Kraftfahrzeuges angeschraubten Haltewinkel befestigt. Der Haltewinkel bietet dem Seilzug nicht die gewünschte Flexibilität und erfordert mehrere Herstellungs- und Montageschritte, insbesondere das Ausbilden von Gewindebohrungen in der Querstrebe und das Verschrauben des Haltewinkels, sowie den damit einhergehenden Einsatz mehrerer Werkzeuge und die Handhabung mehrerer Montageteile.

Aufgabe der vorliegenden Erfindung ist es, aus dem Stand der Technik bekannte Nachteile zu vermindern, insbesondere eine kostengünstig fertigbare und leicht montierbare Montageklammer bereitzustellen, mittels derer sich ein bewegliches Seil einer Feststellbremse an einem Bauteil eines Kraftfahrzeuges mittelbar befestigen lässt.

Die voranstehende Aufgabe wird durch die Gegenstände der Patentansprüche, insbesondere durch eine Montageklammer zur mittelbaren Befestigung eines Seiles einer Feststellbremse an einem Bauteil eines Kraftfahrzeuges nach Anspruch 1, eine Feststellbremse nach Anspruch 14 und ein Kraftfahrzeug nach Anspruch 15 gelöst. Weitere Vorteile und Details der Erfindung ergeben sich aus den Unteransprüchen, der Beschreibung und den Zeichnungen. Dabei gelten Merkmale und Details, die im Zusammenhang mit der erfindungsgemäßen Montageklammer beschrieben sind, selbstverständlich auch im Zusammenhang mit der erfindungsgemäßen Feststellbremse und mit dem erfindungsgemäßen Fahrzeug und jeweils umgekehrt, sodass bezüglich der Offenbarung zu den einzelnen Erfindungsaspekten stets wechselseitig Bezug genommen wird beziehungsweise werden kann.

Nach einem ersten Aspekt der Erfindung wird die Aufgabe gelöst durch eine Montageklammer zur mittelbaren Befestigung eines Seiles einer Feststellbremse an einem Bauteil eines Kraftfahrzeuges, wobei die Montageklammer aufweist: (a) eine Aufnahmehülse mit einer Aufnahmeöffnung zum Aufnehmen des Seiles und einer Längserstreckung entlang einer Längsachse der Aufnahmehülse, (b) ein Befestigungsmittel zur unmittelbaren Befestigung der Montageklammer in einer Montageöffnung des Bauteiles, wobei das Befestigungsmittel sich quer zu der Längsachse der Aufnahmehülse erstreckt, und (c) zwei flexible Haltestege mit jeweils einem Endabschnitt, der mit dem Befestigungsmittel verbunden ist, und jeweils einem Verbindungsabschnitt, der mit der Aufnahmehülse verbunden ist, wobei die Haltestege zwischen den Endabschnitten und den Verbindungsabschnitten gewölbt sind und sich quer zu der Längsachse der Aufnahmehülse erstrecken.

Insbesondere erstreckt sich das Befestigungsmittel orthogonal zu der Längsachse der Aufnahmehülse. Insbesondere erstrecken sich die Haltestege, insbesondere in einem Bereich zwischen Endabschnitt und Verbindungsabschnitt, orthogonal zu der Längsachse der Aufnahmehülse. Das Bauteil kann beispielsweise ein Karosserieteil, insbesondere ein Unterbodenteil, eine Vorderachse oder eine Hinterachse des Kraftfahrzeuges sein.

Die erfindungsgemäße Montageklammer ist durch die Verbindung des Befestigungsmittels mit der Aufnahmehülse über die flexiblen Haltestege in verschiedene Richtungen relativ zu der Längsachse der Aufnahmehülse und in Richtung der Längsachse der Aufnahmehülse beweglich ausgebildet, sodass die Montageklammer den Bewegungen des Seiles der Feststellbremse folgen kann. Dadurch wird eine flexible mittelbare Festlegung des Seiles erreicht, durch die die Lebensdauer der Befestigung und des Seiles über die gesamte Fahrzeuglebensdauer gewährleistet werden kann. Ferner bietet die Montageklammer den Vorteil, dass sie einfach zu handhaben ist, das Seil mit wenigen Montageschritten befestigt werden kann und für die Befestigung keine Werkzeuge erforderlich sind.

Die Montageklammer weist eine Höhe, eine Länge und eine Breite auf. Die Höhe der Montageklammer bemisst sich in Höhenrichtung der Montageklammer, die eine Richtung von dem Befestigungsmittel zu der Aufnahmehülse oder umgekehrt ist. Die Länge der Montageklammer bemisst sich in Längsrichtung entlang der Längsachse der Aufnahmehülse. Insbesondere weist die Aufnahmehülse eine größere Länge als das Befestigungsmittel und die Haltestege auf. Die Breite der Montageklammer bemisst sich in einer Breitenrichtung der Montageklammer, die eine Richtung von dem einen der zwei Haltestege zu dem anderen der zwei Haltestege ist. Die Höhenrichtung, Längsrichtung und Breitenrichtung stehen orthogonal zueinander. Eine Querachse der Montageklammer verläuft in Höhenrichtung und orthogonal zu der Längsachse der Aufnahmehülse. Die Querachse kann eine Symmetrieachse der Montageklammer sein. Mit anderen Worten kann die Montageklammer einen symmetrischen Aufbau bezüglich der Symmetrieachse aufweisen.

Dass die Haltestege gewölbt sind bedeutet mit anderen Worten ausgedrückt, dass die Haltestege zwischen den Endabschnitten und den Verbindungsabschnitten eine Krümmung aufweisen. Insbesondere sind die Haltestege in Richtung von den Endabschnitten zu den Verbindungsabschnitten nach außerhalb des Befestigungsmittels und/oder der Aufnahmehülse gewölbt. Mit anderen Worten sind die Haltestege zwischen den Endabschnitten und den Verbindungsabschnitten in Breitenrichtung entgegengesetzt zueinander gewölbt. Mit noch anderen Worten ausgedrückt, weisen die Haltestege Wölbungsabschnitte zwischen den Endabschnitten und Verbindungsabschnitten auf, die weiter weg relativ von der Querachse gemessen liegen als das Befestigungsmittel und/oder die Aufnahmehülse bzw. ein am weitesten von der Querachse entfernter Punkt, der noch in dem Befestigungsmittel und/oder der Aufnahmehülse liegt. Mit noch weiter anderen Worten ausgedrückt, verläuft die Krümmung durch einen Krümmungspunkt, der weiter entfernt von der Querachse ist als ein in dem Befestigungsmittel und/oder in der Aufnahmehülse liegender Punkt. Die Haltestege können eine geschwungene Form, insbesondere die Form eines C, die Form eines umgedrehten C oder die Form einer nach links oder rechts orientierten Klammer aufweisen. Die Haltestege können in entgegengesetzte Richtungen quer, insbesondere orthogonal, zu der Längsachse gewölbt bzw. gekrümmt sein und/oder die geschwungene Form aufweisen. Je ein Haltesteg kann zusammen mit der Aufnahmehülse eine, insbesondere geschwungene, U-Form oder V-Form ausbilden. Diese Formen und weitere im Rahmen der Erfindung beschriebene Formen beschreiben nur die grundsätzlichen Ausprägungen der Formen, wie sie mit Buchstaben oder bekannten Formen realer Gegenstände ihrem Grunde nach für ein einfaches Verständnis beschrieben werden können. Selbstverständlich sind auch Abweichungen von der beschriebenen Form möglich, solange der Buchstabe oder die Form des realen Gegenstandes weiterhin zu erkennen ist.

Dass die Haltestege flexibel sind, wird zumindest über die Wölbung der Haltestege erreicht. Ferner können die Haltestege aus einem elastischen Material, beispielsweise aus einem Kunststoff, hergestellt sein. Zusätzliche Flexibilität der Haltestege kann über einen ihrer Länge von dem Endabschnitt zu dem Verbindungsabschnitt nach variablen Querschnitt erzielt werden. Weitere Flexibilität kann über die Stelle und Art der Anordnung der Verbindungsabschnitte an der Aufnahmehülse erreicht werden. Insbesondere können die Verbindungsabschnitte der Haltestege in einem Bereich von 25% bis 75% der Höhe der Aufnahmehülse, insbesondere bei 50% der Höhe der Aufnahmehülse angeordnet sein, wobei die Höhe der Aufnahmehülse in Höhenrichtung gemessen wird. Darüberhinausgehende Flexibilität der Haltestege kann über die Ausbildung der Haltestege mit einer bestimmten Haltesteglänge der Haltestege, die von den Endabschnitten zu den Verbindungsabschnitten gemessen wird, erreicht werden. Die Haltesteglänge darf einerseits nicht zu gering sein, da die Haltestege ansonsten zu steif sind. Andererseits darf die Haltesteglänge nicht zu groß sein, da die Haltestege ansonsten nicht stabil genug sind. Als vorteilhaft hat sich eine Haltesteglänge in einem Bereich zwischen 3 und 12 mm, bevorzugt zwischen 4 und 10 mm, und ganz bevorzugt zwischen 5 und 8 mm, erwiesen. Ferner ist es vorteilhaft, eine gewisse Relation der Haltesteglänge zu dem kleinsten Querschnitt der Haltestege in dem Bereich zwischen Endabschnitt und Verbindungsabschnitt vorzusehen. Der kleinste Querschnitt der Haltestege, das heißt der kleinste Querschnitt der an einer Stelle der Haltestege gemessen werden kann, liegt beispielsweise in einem Bereich zwischen 2 und 8 mm², insbesondere 3 und 6 mm². Als vorteilhaft hat sich eine Relation der Haltesteglänge zu dem kleinsten Querschnitt der Haltestege im Bereich zwischen Endabschnitt und Verbindungsabschnitt, das heißt ein Quotient aus Haltesteglänge zu kleinstem Querschnitt, in einem Bereich zwischen 0,5 bis 3, bevorzugt 0,7 bis 2,5 und besonders bevorzugt 1 bis 2, erwiesen. Die Aufnahmeöffnung der Aufnahmehülse kann beispielsweise einen Durchmesser in einem Bereich von 3 bis 25 mm, bevorzugt 4 bis 20 mm, ganz besonders bevorzugt 5 bis 15 mm und ferner bevorzugt 6 bis 12 mm, aufweisen. Die Aufnahmeöffnung und/oder die Aufnahmehülse kann rund sein. Die Aufnahmehülse kann eine zylindrische Form aufweisen. Die Montageöffnung kann insbesondere ein Montageloch sein.

Bevorzugt ist zwischen der Aufnahmehülse, dem Befestigungsmittel und den Haltestegen ein flexibler erster Zwischenraum ausgebildet, wobei der erste Zwischenraum insbesondere eine V-Form, U-Form oder Herzform aufweist. Der flexible erste Zwischenraum ist dergestalt flexibel, als dass er sich in Reaktion auf eine Krafteinwirkung auf die Aufnahmehülse, die durch eine von dem Seil aufgenommene Kraft erfolgen kann, in seiner Form in verschiedene Richtungen elastisch verformen kann. Der erste Zwischenraum bietet insoweit einen Raum für die elastischen Verformungen des Haltesteges relativ zu dem Befestigungsmittel und der Aufnahmehülse und jeweils umgekehrt, sodass die Flexibilität der Montageklammer keinen räumlichen Restriktionen seitens der Montageklammer unterliegt.

Ferner bevorzugt erstrecken sich die zwei Haltestege von den Verbindungsabschnitten, insbesondere entlang der Aufnahmehülse, um die Aufnahmehülse herum und sind miteinander verbunden. In einem Bereich von den Verbindungsabschnitten zu der Verbindung der Haltestege miteinander können die Haltestege stellenweise oder überwiegend einen gegenüber in Bereichen zwischen den Endabschnitten und den Verbindungsabschnitten größeren Querschnitt aufweisen. Mit anderen Worten können die Haltestege in den Bereichen von den Verbindungsabschnitten zu der Verbindung der Haltestege miteinander eine Verdickung relativ gegenüber den Bereichen zwischen den Endabschnitten und den Verbindungsabschnitten aufweisen. Der größere Querschnitt im Bereich von den Verbindungsabschnitten zu der Verbindung der Haltestege miteinander kann an zumindest einer Stelle das 1,2- bis 3-fache, insbesondere das 1,4- bis 2,5-fache des kleinsten oder größten Querschnittes der Haltestege in den Bereichen zwischen den Endabschnitten und Verbindungsabschnitten betragen. Dadurch wird eine hohe Stabilität der Montageklammer erreicht und der Kraftfluss von der Aufnahmehülse über die Haltestege zu dem Befestigungsmittel optimiert.

Auch bevorzugt ist, dass zumindest einer der Haltestege einen daran angeordneten Greifabschnitt aufweist, wobei der Greifabschnitt sich in zumindest eine Längsrichtung entlang der Längsachse der Aufnahmehülse über den Haltesteg hinaus erstreckt. Insbesondere können beide Haltestege den Greifabschnitt aufweisen. Der Greifabschnitt kann insbesondere eine Länge in Längsrichtung aufweisen, die zumindest 20%, bevorzugt zumindest 30% und ferner bevorzugt zumindest 40% und vorzugsweise höchstens 100% einer Länge der Aufnahmehülse beträgt. Der Greifabschnitt kann insbesondere eine Höhe in Höhenrichtung der Montageklammer aufweisen, die zumindest 20%, bevorzugt zumindest 30% und ferner bevorzugt zumindest 40% und vorzugsweise höchstens 100% einer in Höhenrichtung gemessenen Höhe der Aufnahmehülse entspricht. Der Greifabschnitt kann zumindest in dem Bereich zwischen Verbindungsabschnitt und der Verbindung der Haltestege miteinander an den Haltesteg angeformt sein. Der Greifabschnitt kann eine konkave und/oder rechteckige Greiffläche aufweisen. Die Greifabschnitte ermöglichen ein ergonomisches Greifen und Betätigen der Montageklammer, etwa durch Zusammendrücken der Montageklammer.

Weiter bevorzugt ist, dass das Befestigungsmittel eine Befestigungsplatte aufweist, wobei die Befestigungsplatte in zwei separate Befestigungsplattensegmente aufgeteilt ist, wobei je einer der ersten Endabschnitte mit einem der Befestigungsplattensegmente verbunden ist. Insbesondere ist die Befestigungsplatte scheibenförmig ausgebildet. Die Befestigungsplattensegmente können jeweils Hälften der Befestigungsplatte sein. Je einer der Haltestege kann über seinen Endabschnitt mit je einer der Befestigungsplattensegmente verbunden sein. Der Endabschnitt kann eine Keilform aufweisen. Durch die Keilform des Endabschnittes des Haltesteges wird ein Brechen des Haltesteges infolge der Kraftübertragung auf das Befestigungsplattensegment vermieden. Die Befestigungsplatte kann eine den Haltestegen abgewandte gerade Fläche aufweisen. Ferner kann eine Fläche der Befestigungsplatte, an der die Haltestege angeordnet sind, konvex, mit anderen Worten ausgedrückt nach außen gewölbt, sein. Dadurch wird die Kraftübertragung von den Haltestegen auf das Befestigungsmittel verbessert. Die Befestigungsplatte ermöglicht eine gute Kraftübertragung auf das Karosseriebauteil einerseits und eine Abdeckung der Montageöffnung des Karosseriebauteiles andererseits.

Darüber hinaus bevorzugt weist das Befestigungsmittel zwei separate Befestigungshaken auf, wobei die Befestigungshaken je einen Befestigungsarm aufweisen und an freien Enden der Befestigungsarme Befestigungsflügel angeordnet sind. Die Befestigungsflügel sind insbesondere flexibel in Richtung auf die Befestigungsarme hin ausgebildet, beispielsweise elastisch ausgebildet. Bei einer Ausführungsform der Montageklammer mit Befestigungsplatte kann je einer der Befestigungshaken an je einem der Befestigungsplattensegmente angeordnet sein. Die Befestigungshaken funktionieren wie Widerhaken in der Montageöffnung und greifen das Bauteil, beispielsweise ein Karosserieblech, von innerhalb der Montageöffnung. Die Montageklammer kann so das Karosseriebauteil beispielsweise zwischen der Befestigungsplatte und den Befestigungsflügeln der Befestigungshaken ohne zu verrutschen und damit sicher greifen.

Dabei ist bevorzugt, dass freie Enden der Befestigungsflügel stufenförmig mit zumindest zwei Stufen ausgebildet sind. Ferner können die freien Enden des Befestigungsflügels zumindest drei Stufen aufweisen. Insbesondere steigen die Stufen in Richtung zu der Aufnahmehülse. Die Stufen weisen ihrerseits zu dem Bauteil korrespondierende Anlageflächen auf, sodass das freie Ende des Befestigungsflügels mit der jeweiligen Stufe in Anlage mit dem Bauteil gebracht werden kann. Die Stufen ermöglichen die Herstellung einer Montageklammer, die für verschiedene Bauteile, insbesondere Karosserieteile, Bleche, Achsen, Achsenteile, Achsprofile oder Träger unterschiedlicher Stärken, eingesetzt werden kann. Da trotz dieser Variantenvielfalt nur eine Montageklammer hergestellt und bereitgehalten wird, fallen die Herstellungskosten, Lagerkosten und Handhabungskosten sehr gering aus.

Bevorzugt ist, dass die Aufnahmehülse in einem unbelasteten Zustand geöffnet ist. Bei geöffneter Aufnahmehülse wird das Seil nicht eingefädelt, sondern kann im bereits montierten Zustand einfach in die geöffnete Aufnahmehülse eingelegt werden, die anschließend wieder geschlossen werden kann, um einen sicheren Halt des Seiles innerhalb der Aufnahmehülse zu gewährleisten.

Dabei ist bevorzugt, dass die geöffnete Aufnahmehülse einen ersten Spalt als Öffnung aufweist, der in eine Längsrichtung entlang der Längsachse der Aufnahmehülse verläuft und die Aufnahmehülse in zwei Aufnahmehülsenabschnitte aufteilt, die um eine Schwenkachse der Montageklammer aufeinander zu schwenkbar sind, um den ersten Spalt der Aufnahmehülse zu verkleinern oder zu schließen. Mit anderen Worten ist der erste Spalt eine längliche Materialaussparung in der Aufnahmehülse. Insbesondere erfolgt ein Verkleinern bzw. Schließen des ersten Spaltes zwischen den Aufnahmehülsenabschnitte in tangentiale Richtungen entlang eines Umfanges der Aufnahmehülsenabschnitte aufeinander zu. Die Schwenkachse ist insbesondere gegenüber von dem ersten Spalt ausgebildet. Die Schwenkachse kann in den Haltestegen liegen, wenn die Haltestege sich um die Aufnahmehülse herum erstrecken und sich miteinander verbinden. In einem montierten Zustand, in dem das Befestigungsmittel in der Montageöffnung befestigt ist, können die Aufnahmehülsenabschnitte durch die Montageöffnung aufeinander zu geschwenkt werden und so kann der erste Spalt klein gehalten oder verschlossen werden. Auf aufwendige Verschlussmechanismen wird somit verzichtet. Das Ausbilden eines ersten Spaltes in der Aufnahmehülse ist eine einfache und kostengünstige konstruktive Lösung zur Bereitstellung der Öffnung der Aufnahmehülse.

Ferner ist bevorzugt, dass das Befestigungsmittel zusammen mit der Aufnahmehülse um die Schwenkachse schwenkbar ist. Insbesondere ist die Schwenkachse der Aufnahmehülse auch die Schwenkachse des Befestigungsmittels. Die Aufnahmehülse und das Befestigungsmittel sind dann entsprechend um die Schwenkachse schwenkbar. Bei einer Ausführungsform der Montageklammer mit separaten Befestigungsplattensegmenten und/oder mit separaten Befestigungshaken sind die Befestigungsplattensegmente und/oder die Befestigungshaken um die Schwenkachse schwenkbar. Dies ermöglicht, dass in einem Montageschritt das Befestigungsmittel zusammen mit der Aufnahmehülse geöffnet werden kann, um das Seil in die Aufnahmehülse einzulegen, und in einem einzigen weiteren Montageschritt geschlossen werden kann, um schließlich das Befestigungsmittel in der Montageöffnung zu befestigen. Vorzugsweise kann die Schwenkachse durch ein Scharnier gebildet sein, welches zwischen den beiden Haltestegen liegt bzw. die beiden Haltestege miteinander schwenkbeweglich verbindet.

Zudem ist bevorzugt, dass die Aufnahmehülse einen zweiten Spalt aufweist, der in eine Längsrichtung entlang der Längsachse der Aufnahmehülse verläuft und insbesondere gegenüber von dem ersten Spalt ausgebildet ist. Mit anderen Worten ist der zweite Spalt eine längliche Materialaussparung in der Aufnahmehülse. Insbesondere separiert der zweite Spalt die Aufnahmehülsenabschnitte voneinander. Insbesondere sind die Umfänge der Aufnahmehülsenabschnitte gleich groß. Die Aufnahmehülsenabschnitte sind mit anderen Worten nicht unmittelbar miteinander verbinden. In einer Ausführungsform, in der sich die Haltestege um die Aufnahmehülse herum erstrecken und miteinander verbinden, sind die Aufnahmehülsenabschnitte jedoch miteinander mittelbar über die Haltestege verbunden. Der zweite Spalt bringt einen Freiraum zwischen die Aufnahmehülsenabschnitte ein und erhöht dadurch die Flexibilität der Aufnahmehülse für das Schließen des ersten Spaltes bzw. der Aufnahmehülse, wodurch auch die zweite Spalte verkleinert oder geschlossen wird.

Noch weiter ist bevorzugt, dass ein zweiter Zwischenraum zwischen der Aufnahmehülse, dem zweiten Spalt und den Haltestegen ausgebildet ist, wobei der zweite Zwischenraum insbesondere eine ovale Form aufweist. Der zweite Zwischenraum ermöglicht eine noch weitere Flexibilität der Aufnahmehülse für das Schließen dieser. In einer Ausführungsform, in der sich die Haltestege um die Aufnahmehülse herum erstrecken und miteinander verbinden, wird die Schwenkachse in die Haltestege gelegt. Mit anderen Worten bilden die Haltestege dann die Schwenkachse. Dies ermöglicht eine sehr große Öffnung der Aufnahmehülse, sodass auch ein Seil größeren Durchmessers einfach in die Aufnahmehülse eingeführt werden kann.

Es ist ferner bevorzugt, dass die Montageklammer einen schlagzähmodifizierten Kunststoff, insbesondere ein schlagzähmodifiziertes Polyamid, aufweist, bevorzugt aus einem derartigen schlagzähmodifizierten Kunststoff besteht. Ein schlagzähmodifizierter Kunststoff ist ein Kunststoff, dessen Schlagzähigkeit durch Modifikation erhöht wurde. Die Modifikation kann beispielsweise durch die Zugabe von Verstärkungsstoffen und/oder Füllstoffen in den Kunststoff erfolgen. Beispielsweise können als Verstärkungsstoffe Glasfasern, Glaskugeln und/oder Kohlefasern dem Kunststoff zugegeben sein. Durch die erhöhte Schlagzähigkeit ist die Montageklammer widerstandsfähig gegenüber Steinschlägen, die an der Unterseite des Kraftfahrzeuges auftreten können. Dadurch wird vermieden, dass die Montageklammer beschädigt wird. Ferner ist die Montageklammer dadurch für die gesamte Fahrzeuglebensdauer ausgelegt, sodass die Montageklammer nicht wegen Abnutzung auszutauschen ist. Darüber hinaus ist Polyamid witterungsbeständig in dem insbesondere bei außerhalb des Kraftfahrzeuges angeordneten Komponenten relevanten Temperaturbereich von -40°C bis 80°C. Bevorzugt ist die Montageklammer einstückig, insbesondere monolithisch, hergestellt. Dadurch wird die Montageklammer besonders stabil. Die Montageklammer kann ein spritzgegossenes Kunststoffbauteil sein. Dadurch wird eine besonders leichte Montageklammer bereitgestellt, die zudem sehr kostengünstig herstellbar ist.

Das Befestigungsmittel der Montageklammer kann als ein irreversibles Befestigungsmittel ausgebildet sein. Dies meint, dass das Befestigungsmittel, wenn es einmal in der Montageöffnung befestigt wurde, nicht mehr zerstörungsfrei entfernt werden kann. Mit anderen Worten ist die Montageklammer für eine einmalige Befestigung ausgelegt. Dies ist vorteilhaft, weil das Befestigungsmittel entsprechend sehr günstig ausgebildet werden kann. Ferner wird ein versehentliches Lösen der Befestigung der Montageklammer in der Montageöffnung ausgeschlossen.

Nach einem zweiten Aspekt der Erfindung wird die Aufgabe gelöst durch eine Feststellbremse für ein Kraftfahrzeug mit einer Feststellvorrichtung, insbesondere einem Hebel, einem mit der Feststellvorrichtung wirkverbundenen Seil, einer mit dem Seil wirkverbundenen Bremsbacke einer Bremse an einem Rad des Kraftfahrzeuges, einem Bauteil des Kraftfahrzeuges und zumindest einer Montageklammer nach einem der voranstehenden Ansprüche, wobei das Seil in der Aufnahmeöffnung der Aufnahmehülse der zumindest einen Montageklammer aufgenommen ist und das Befestigungsmittel der zumindest einen Montageklammer in einer Montageöffnung des Bauteiles unmittelbar befestigt ist, sodass das Seil mittelbar an dem Bauteil befestigt ist.

Wirkverbunden im Sinne der Erfindung meint, dass die wirkverbundenen Komponenten so miteinander verbunden sind, dass sie eine Wirkung aufeinander auswirken, wenn eine der Komponenten betätigt oder bewegt wird. Für eine Wirkverbundenheit ist eine unmittelbare Verbindung von Komponenten also nicht erforderlich. Beispielsweise ist nicht erforderlich, dass das Seil unmittelbar mit der Feststellvorrichtung, insbesondere dem Hebel, verbunden ist. Das Seil kann stattdessen beispielsweise über ein Getriebe mit Zahnrädern und/oder ein weiteres Seil mit dem Hebel wirkverbunden sein.

Das Seil kann in einem Schlauch angeordnet sein, der in der Aufnahmehülse aufgenommen ist. Durch den Schlauch wird das Seil vor äußeren Einflüssen wie Steinschlag geschützt. Außerdem wird dadurch eine Beschädigung der Aufnahmehülse durch das sich darin bewegende Seil vermieden. Der Hebel kann beispielsweise ein Fußhebel oder ein Handhebel sein. Die Bremsbacke kann eine Bremsbacke einer Scheibenbremse oder einer Trommelbremse sein, die insbesondere an einem Rad an einer Hinterachse des Fahrzeuges angeordnet ist. Das Seil kann mit mehreren Bremsbacken verbunden sein. Das Bauteil kann beispielsweise ein Unterbodenblech, ein Querträger oder eine Fahrzeugachse, insbesondere eine Verbundlenkerachse, des Kraftfahrzeuges sein. Das Seil kann mit zwei oder mehr in Serie angeordneten Montageklammern an dem Bauteil mittelbar befestigt sein, wobei je eine der Montageklammern in je einer Montageöffnung des Bauteiles befestigt ist. Ferner können zwei Seile der Feststellbremse mit je zumindest einer Montageklammer an dem Bauteil oder an unterschiedlichen Bauteilen befestigt sein, wobei die Seile insbesondere mit Bremsbacken unterschiedlicher Bremsen an unterschiedlichen Rädern insbesondere der Hinterachse des Kraftfahrzeuges wirkverbunden sind. Die Befestigung der zwei Seile an dem Bauteil mittels der zumindest einen, insbesondere der zumindest zwei Montageklammern kann symmetrisch relativ gegenüber einer Symmetrielinie des Bauteiles oder der Fahrzeugachse zwischen den zwei Seilen ausgebildet sein.

Die Aufnahmeöffnung weist insbesondere einen Durchmesser auf, der größer ist als der Durchmesser des Seiles oder des Schlauches, in dem das Seil angeordnet ist. Der Durchmesser der Aufnahmeöffnung ist insbesondere um bis zu 30%, bevorzugt bis zu 20% und besonders bevorzugt um bis zu 10% größer als Durchmesser des Seiles oder des Schlauches. Dadurch kann das Seil oder der Schlauch besonders einfach in die Aufnahmehülse eingelegt werden und hat Spielraum für Bewegungen insbesondere in axialer Richtung entlang der Längsachse der Aufnahmehülse. Insbesondere ist der Durchmesser der Befestigungsplatte zumindest so groß wie und bevorzugt größer als der Durchmesser der Montageöffnung.

Nach einem dritten Aspekt der Erfindung wird die Aufgabe gelöst durch ein Kraftfahrzeug mit einer erfindungsgemäßen Feststellbremse. Das Kraftfahrzeug kann beispielsweise ein Personenkraftwagen sein.

Anhand der beigefügten Zeichnungen wird die Erfindung nachfolgend näher erläutert. Sämtliche aus den Ansprüchen, der Beschreibung oder den Figuren hervorgehenden Merkmale, einschließlich konstruktiver Einzelheiten und räumlicher Anordnungen, können sowohl für sich als auch in den beliebigen verschiedenen Kombinationen erfindungswesentlich sein. Elemente mit gleicher Funktion und/oder Wirkungsweise sind in den Figuren jeweils mit denselben Bezugszeichen versehen. Wenn mehr als ein Element desselben Typs in einer der Figuren vorhanden ist werden die Elemente in aufsteigender Reihenfolge nummeriert, wobei die aufsteigende Nummer des Elements von dem Bezugszeichen durch einen Punkt getrennt wird. Dabei zeigen:
- Fig. 1: eine Vorderansicht eines Ausführungsbeispieles einer erfindungsgemäßen Montageklammer in einem geöffneten Zustand,
- Fig. 2: eine perspektivische Seitenansicht der Montageklammer aus Fig. 1 in dem geöffneten Zustand,
- Fig. 3: eine Vorderansicht der Montageklammer aus Fig. 1 in einem geschlossenen Zustand,
- Fig. 4: eine perspektivische Seitenansicht der Montageklammer aus Fig. 1 in dem geschlossenen Zustand,
- Fig. 5: eine Seitenansicht der Montageklammer aus Fig. 1 in dem geschlossenen Zustand,
- Fig. 6: eine Draufsicht der Montageklammer aus Fig. 1 in dem geschlossenen Zustand,
- Fig. 7: eine perspektivische Seitenansicht eine Montage eines Seiles einer erfindungsgemäßen Feststellbremse mittels zwei Montageklammern gemäß Fig. 1 an einer Verbundlenkerachse eines erfindungsgemäßen Fahrzeuges,
- Fig. 8: ein Kraftfahrzeug mit einer erfindungsgemäßen Feststellbremse.

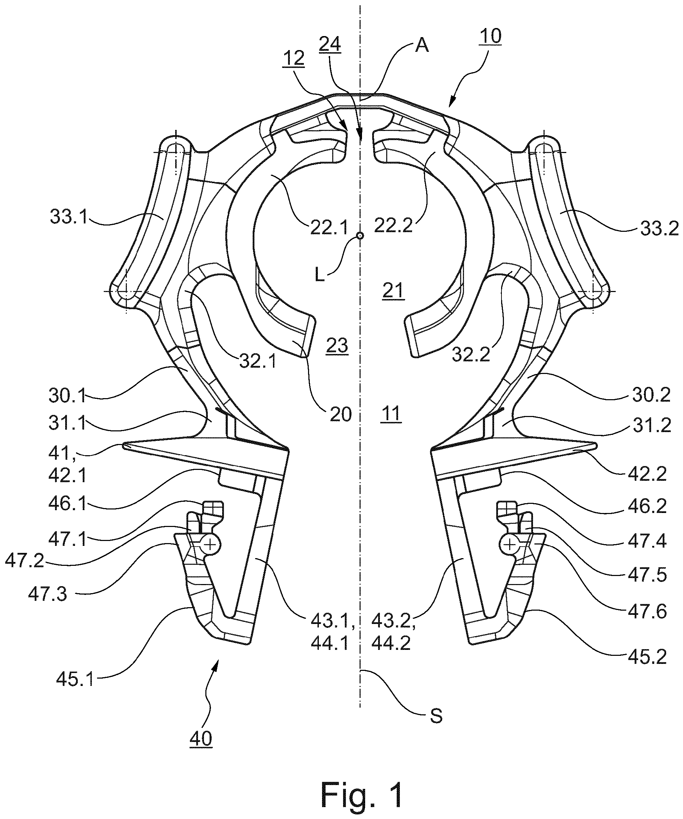

Fig. 1 zeigt eine Vorderansicht eines Ausführungsbeispieles einer erfindungsgemäßen Montageklammer 10 in einem geöffneten Zustand. Der geöffnete Zustand der Montageklammer 10 ist der Herstellungszustand der Montageklammer 10 oder mit anderen Worten ein unbelasteter Zustand, in dem keine Lasten auf die Montageklammer 10 wirken und deshalb auch keine mechanischen Spannungen in der Montageklammer 10 vorliegen. In dem geöffneten Zustand der Montageklammer 10 ist eine Aufnahmehülse 20 der Montageklammer 10 geöffnet. Der geöffnete Zustand als Herstellzustand der Montageklammer 10 ist vorteilhaft, da die Montageklammer 10 in dem geöffneten Zustand für das Einlegen beispielsweise eines in dieser Figur nicht gezeigten Seils einer Feststellbremse unmittelbar bereit ist. Dadurch gestaltet sich die Montage der Montageklammer 10 besonders einfach.

Die Montageklammer 10 ist vorzugsweise monolithisch aus einem schlagzähmodifizierten Polyamid hergestellt. Das schlagzähmodifizierte Polyamid sorgt für eine hohe Temperaturbeständigkeit und Widerstandsfähigkeit der Montageklammer 10 insbesondere gegen Steinschläge, wie sie an einem Unterboden eines Kraftfahrzeuges auftreten können. Durch die monolithische Struktur der Montageklammer 10 ist die Montageklammer 10 sehr stabil.

Die Montageklammer 10 weist die Aufnahmehülse 20, zwei Haltestege 30.1, 30.2 und ein Befestigungsmittel 40 auf, die aneinander angeformt sind. Die Aufnahmehülse 20 ist mit einer Aufnahmeöffnung 21 für beispielsweise das zuvor erwähnte Seil ausgebildet. Die Aufnahmeöffnung 21 ist rund. Die Aufnahmehülse 20 ist durch einen ersten Spalt 23 und einen zweiten Spalt 24 in separate Aufnahmehülsenabschnitte 22.1, 22.2 aufgeteilt. Die separaten Aufnahmehülsenabschnitte 22.1, 22.2 weisen jeweils einen gleich großen Umfang auf. Die Aufnahmehülsenabschnitte 22.1, 22.2 sind mittelbar durch Haltestege 30.1, 30.2 verbunden, die entlang der Aufnahmehülse 20 verlaufen und sich oberhalb der Aufnahmehülse 20 relativ in Richtung von dem Befestigungsmittel 40 zu der Aufnahmehülse 20 verbinden. Die Aufnahmehülsenabschnitte 22.1, 22.2 sind einander gegenüberliegend angeordnet. Die Aufnahmehülsenabschnitte 22.1, 22.2 sind symmetrisch gegenüber einer Symmetrieachse S der Montageklammer 10 ausgebildet.

Die Aufnahmehülse 20 ist ferner über flexible Haltestege 30.1, 30.2 mit dem Befestigungsmittel 40 verbunden. Von dem Befestigungsmittel 40 erstrecken sich die Haltestege 30.1, 30.2 in Richtung zu der Aufnahmehülse 20 mit einer Wölbung. Die Haltestege 30.1, 30.2 sind dabei nach außen in Richtung weg von der Symmetrieachse S gewölbt. Die Wölbungen der Haltestege 30.1, 30.2 erstrecken sich in entgegengesetzte Richtungen weg von der Symmetrieachse S. Die gewölbten Haltestege 30.1, 30.2 erstrecken sich in Richtung weg von der Symmetrieachse S weiter weg von der Symmetrieachse als die Aufnahmehülse 20 sich von der Symmetrieachse S weg erstreckt. Die Form des Haltesteges 30.1 kann näherungsweise als die Form eines C oder einer nach rechts orientierten Klammer beschrieben werden. Die Form des Haltesteges 30.2 kann näherungsweise als die Form eines umgedrehten C oder einer nach links orientierten Klammer beschrieben werden. Die Haltestege 30.1, 30.2 sind mit Endabschnitten 31.1, 31.2 jeweils an einem Befestigungsplattensegment 42.1, 42.2 einer Befestigungsplatte 41 des Befestigungsmittels 40 angeordnet. Die Endabschnitte 31.1, 31.2 sind dabei keilförmig mit der Wölbung der Haltestege 30.1, 30.2 ausgebildet. An der Aufnahmehülse 20 sind die Haltestege 30.1, 30.2 jeweils über Verbindungsabschnitte 32.1, 32.2 der Haltestege 30.1, 30.2 an der Aufnahmehülse 20 angeformt. Die Verbindungsabschnitte 32.1, 32.2, die mit der Aufnahmehülse 20 verbunden sind, weisen zumindest stellenweise einen größeren Querschnitt auf als die Haltestege 30.1, 30.2 in einem Bereich zwischen den Verbindungsabschnitten 32.1, 32.2 und den Endabschnitten 31.1, 31.2. An den Verbindungsabschnitten 32.1, 32.2 der Haltestege 30.1, 30.2 sind jeweils Greifabschnitte 33.1, 33.2 angeordnet. In dieser Ansicht ist gut erkennbar, dass eine Greiffläche der Greifabschnitte 33.1, 33.2 konkav ausgebildet ist.

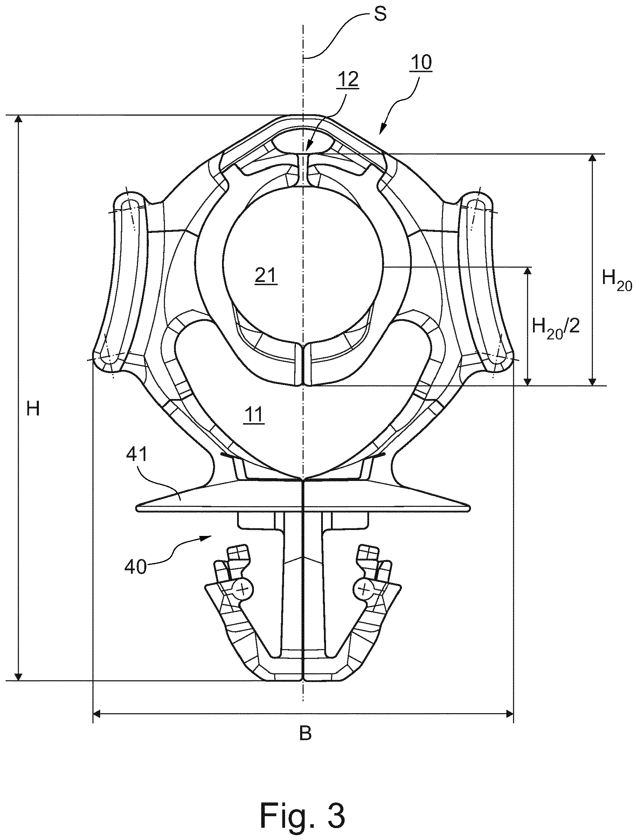

Die Befestigungsplatte 41 des Befestigungsmittels 40 ist scheibenförmig ausgebildet bzw. weist einen scheibenförmigen Umfang auf, wie in geschlossenem Zustand der Montageklammer 10, wie er in den Fig. 3 bis 6 gezeigt ist, deutlich zu erkennen ist. Die Befestigungsplatte 41 ist zudem mit einer konvexen Oberseite, die in Richtung zu der Aufnahmehülse 20 zeigt, ausgebildet. Die Befestigungsplattensegmente 42.1, 42.2 sind jeweils halbscheibenförmig ausgebildet. Zwischen der Aufnahmehülse 20, den Haltestegen 30.1, 30.2 und der Befestigungsplatte 41 des Befestigungsmittels 40 ist ein flexibler erster Zwischenraum 11 ausgebildet. Der flexible erste Zwischenraum 11 ermöglicht eine ungehinderte elastische Verformung der Haltestege 30.1, 30.2 relativ zueinander und zu der Aufnahmehülse 20, wenn Kräfte von dem aufgenommenen Seil von der Aufnahmehülse 20 über die Haltestege 30.1, 30.2 auf das Befestigungsmittel 40 übertragen werden. In dem geöffneten Zustand der Montageklammer 10 weist der erste Zwischenraum 11 näherungsweise eine geöffnete U-Form oder V-Form auf.

Das Befestigungsmittel 40 weist ferner Befestigungshaken 43.1, 43.2 mit Befestigungsarmen 44.1, 44.2 auf. Die Befestigungsarme 44.1, 44.2 sind an je einem ihrer Enden an den Befestigungsplattensegmenten 42.1, 42.2 angeordnet. Insbesondere sind die Befestigungsarme 44.1, 44.2 an Rändern der Befestigungsplattensegmente 42.1, 42.2 angeordnet, an denen die Befestigungsplatte 41 in die Befestigungsplattensegmente 42.1, 42.2 aufgeteilt ist. An freien Enden der Befestigungsarme 44.1, 44.2, die den Befestigungsplattensegmenten 42.1, 42.2 gegenüberliegen, sind Befestigungsflügel 45.1, 45.2 angeordnet. Die Befestigungsflügel 45.1, 45.2 sind elastisch relativ in Richtung zu den Befestigungsarmen 44.1, 44.2 ausgebildet. Dadurch können die Befestigungsarme 44.1, 44.2 zusammen mit den Befestigungsflügeln 45.1, 45.2 durch eine in dieser Figur nicht gezeigte Montageöffnung 61 eines Bauteiles 60 geführt werden, selbst wenn die Montageöffnung 62 einen Durchmesser aufweist, der kleiner als ein Durchmesser eines gedachten Kreises um die Befestigungsflügel 45.1, 45.2 herum ist. Dabei werden die Befestigungsflügel 45.1, 45.2 durch einen Rand der Montageöffnung 61 elastisch in Richtung zu den Befestigungsarmen 44.1, 44.2 gedrückt. Nach Durchführen der Befestigungshaken 43.1, 43.2 durch die Montageöffnung 61 können sich die Befestigungsflügel 45.1, 45.2 in Richtung von den Befestigungsarmen 44.1, 44.2 weg ausbreiten. Nach Durchführen der Befestigungsflügel 45.1, 45.2 durch die Montageöffnung 61 des Bauteiles 60 legen sich die Befestigungsplattensegmente 42.1, 42.2 von oberhalb der Montageöffnung 61 an das Bauteil 60, das beispielsweise ein Blech, eine Hinterachse oder ein Träger sein kann, an. Auf einer Unterseite der Befestigungsplattensegmente 42.1, 42.2, die der Aufnahmehülse 20 abgewandt ist, können Überstände 46.1, 46.2 der Befestigungsarme 44.1, 44.2 angeordnet sein. Die Überstände 46.1, 46.2 erstrecken sich von den Enden der Befestigungsarme 44.1, 44.2, die an den Befestigungsplattensegmenten 42.1, 42.2 angeordnet sind, in Richtung weg von der Symmetrieachse S. Die Überstände 46.1, 46.2 legen sich im montierten Zustand der Montageklammer 10 an eine Oberseite des Bauteiles 60 an. Die freien Enden der Befestigungsflügel 45.1, 45.2 weisen jeweils drei Stufen 47.1, 47.2, 47.3, 47.4, 47.5, 47.6 auf, die sich aufsteigend in Richtung zu der Aufnahmehülse 20 erstrecken. Die Stufen 47.1, 47.2, 47.3, 47.4, 47.5, 47.6 weisen ihrerseits zu einer Unterseite des Bauteiles 60 unterhalb der Montageöffnung 61 korrespondierende Anlageflächen auf, sodass die Anlagefläche einer jeweiligen Stufe 47.1, 47.2, 47.3, 47.4, 47.5, 47.6 in Übereinstimmung mit einer Stärke des Bauteiles 60 in Anlage mit dem Bauteil 60 gebracht werden kann.

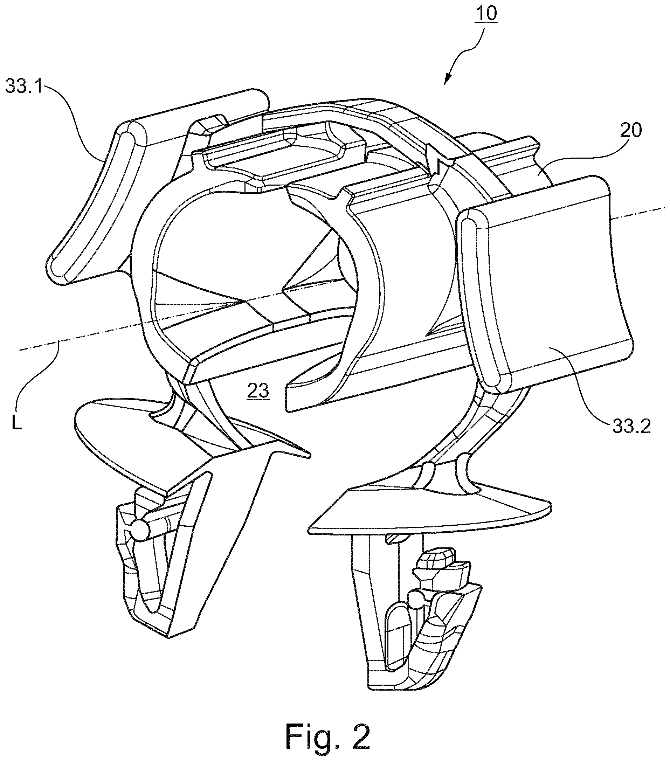

Der erste Spalt 23 der Aufnahmehülse 20 ist, wie in Fig. 2 gut zu erkennen ist, eine in Längsrichtung entlang der Längsachse L der Aufnahmehülse 20 verlaufende Öffnung, die die Aufnahmehülse 20 in die beiden Aufnahmehülsenabschnitte 22.1, 22.2 aufteilt. Dadurch sind die beiden Aufnahmehülsenabschnitte 22.1, 22.2 um eine Schwenkachse A der Montageklammer 10 aufeinander zu schwenkbar sind. Das Verschwenken um die Schwenkachse A kann durch Zusammendrücken der Montageklammer 10 an den Greifabschnitten 33.1, 33.2 erfolgen. Durch das Schwenken der Aufnahmehülsenabschnitte 22.1, 22.2 aufeinander zu lässt sich der Spalt 23 verschließen. Der geöffnete Zustand der Montageklammer 10 zeichnet sich entsprechend dadurch aus, dass der Spalt 23 vergrößert bzw. geweitet ist. Dadurch lässt sich das Seil quer zu der Längsachse L in die Aufnahmeöffnung 21 einführen. Die Schwenkachse A liegt dabei gegenüber von dem ersten Spalt 23 in den Haltestegen 30.1, 30.2 bzw. in der Verbindung der Haltestege 30.1, 30.2 miteinander. Mit anderen Worten wird die Schwenkachse A durch die Haltestege 30.1, 30.2 bzw. die Verbindung der Haltestege 30.1, 30.2 miteinander ausgebildet. Das Schwenken der Schwenkachse A erfolgt damit durch eine elastische Verformung der Haltestege 30.1, 30.2. Somit werden beim Schwenken der Aufnahmehülsenabschnitte 22.1, 22.2 auch die Haltestege 30.1, 30.2 geschwenkt bzw. elastisch um die Schwenkachse A verformt. Auch werden die Befestigungshaken 43.1, 43.2 zusammen mit den Befestigungsplattensegmenten 42.1, 42.2 beim Schwenken der Aufnahmehülsenabschnitte 22.1, 22.2 um die Schwenkachse A geschwenkt. Dadurch wird auch eine Öffnung zwischen den Befestigungshaken 43.1, 43.2 und den Befestigungsplattensegmenten 42.1, 42.2 geschlossen. Ferner passiert das Seil beim Einführen auch den ersten Zwischenraum 11, der durch das Schwenken der Aufnahmehülsenabschnitte 22.1, 22.2 um die Schwenkachse A vergrößert wird. Zwischen der Aufnahmehülse 20, dem zweiten Spalt 24 und den Haltestegen 30.1, 30.2 ist ein zweiter Zwischenraum 12 mit einer ovalen Form ausgebildet.

Fig. 2 zeigt eine perspektivische Seitenansicht der Montageklammer 10 aus Fig. 1 in dem geöffneten Zustand. Hier ist besonders gut zu erkennen, dass die Befestigungsplatte 40 die Form einer in ihrer Mitte geteilten Scheibe aufweist. Ferner ist zu erkennen, dass die Aufnahmehülse 20 die Form eines Hohlzylinders aufweist, wobei eine Längserstreckung der Aufnahmehülse 20 in Längsrichtung entlang der Längsachse L größer als ein Durchmesser der Aufnahmehülse 20 ist. Dies ermöglicht eine gute Kraftübertragung von dem Seil auf die Aufnahmehülse 20.

Fig. 3 zeigt eine Vorderansicht der Montageklammer 10 aus Fig. 1 in einem geschlossenen Zustand. In dem geschlossenen Zustand ist der erste Spalt 23 gegenüber dem geöffneten Zustand verkleinert, sodass das Seil nicht mehr aus der Aufnahmehülse 20 entweichen kann, oder geschlossen. Ebenso sind in dem geschlossenen Zustand der Montageklammer 10 die Befestigungsplattensegmente 42.1, 42.2 berührend aneinander angeordnet. Ferner sind in dem geschlossenen Zustand auch die Befestigungsarme 44.1, 44.2 berührend aneinander angeordnet. Der erste Zwischenraum 11 weist in dem geschlossenen Zustand näherungsweise eine geschlossene U-Form, V-Form oder Herzform auf. Die Aufnahmehülse 20 weist eine Höhe H₂₀ auf, die in eine Richtung entlang der Symmetrieachse S von dem Befestigungsmittel 40 zu der Aufnahmehülse 20 und ab der Aufnahmehülse 20 gemessen wird. Die flexiblen Haltestege 30.1, 30.2 sind mit Verbindungsabschnitten 32.1, 32.2 der Haltestege 30.1, 30.2 auf halber Höhe H₂₀/2 der Aufnahmehülse 20 an der Aufnahmehülse 20 angeordnet. Eine Breite B der Montageklammer liegt vorzugsweise im Bereich von 15 bis 60 mm, insbesondere im Bereich von 20 bis 50 mm. Eine Höhe H der Montageklammer liegt vorzugsweise im Bereich von 20 bis 70 mm, insbesondere im Bereich von 25 bis 60 mm. Ein bevorzugtes Verhältnis von Breite B zu Höhe H der Montageklammer liegt vorzugsweise im Bereich 0,4 bis 2, insbesondere im Bereich von 0,5 bis 1,5 und mehr noch besonders im Bereich von 0,7 bis 1,3.

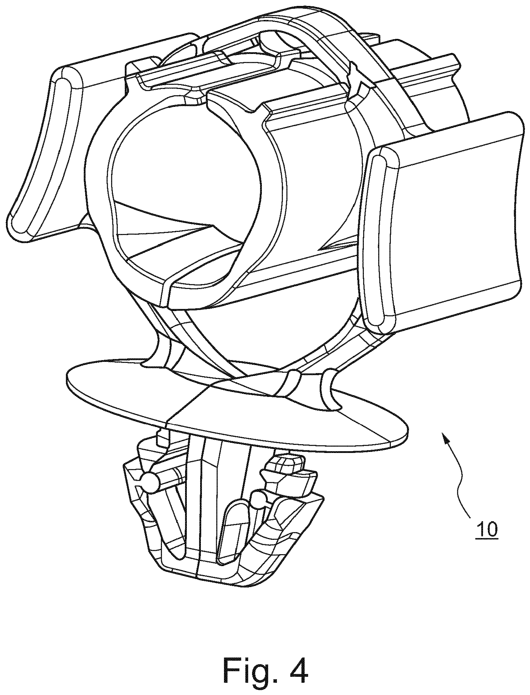

Fig. 4 zeigt eine perspektivische Seitenansicht der Montageklammer 10 aus Fig. 1 in dem geschlossenen Zustand.

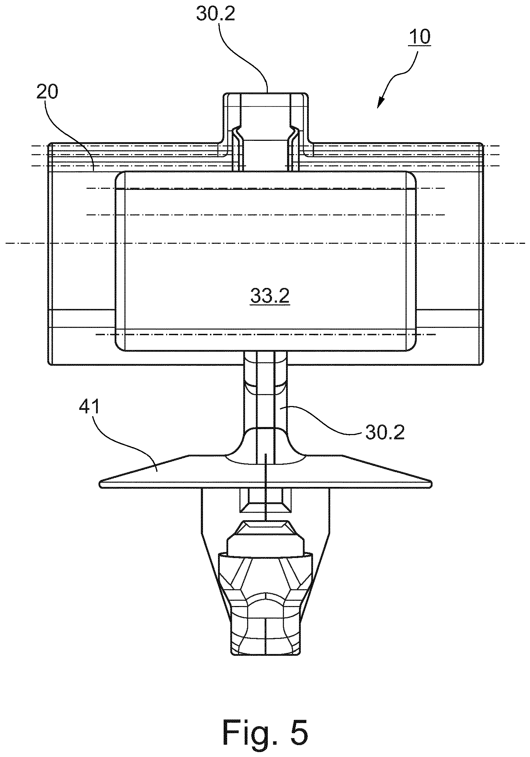

Fig. 5 zeigt eine Seitenansicht der Montageklammer 10 aus Fig. 1 in dem geschlossenen Zustand. Hier ist zu erkennen, dass die Greifabschnitte sich in Längsrichtung entlang der Längsachse L über die Haltestege 30.1, 30.2 erstrecken. Die Haltestege 30.1, 30.2 weisen eine Längserstreckung in Längsrichtung entlang der Längsachse L auf, die im Bereich von 3% bis 20%, insbesondere 4% bis 15% und mehr noch besonders 5% bis 10% der Länge der Aufnahmehülse 20 liegt.

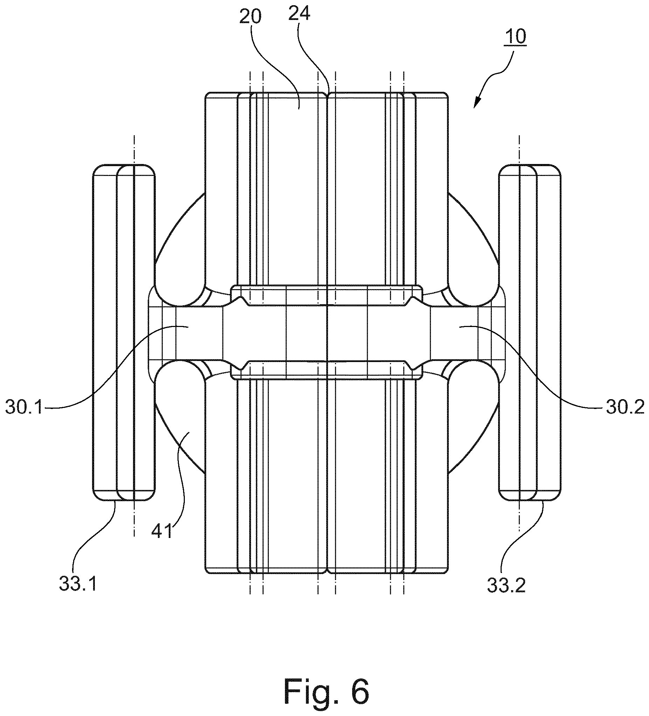

Fig. 6 zeigt eine Draufsicht der Montageklammer aus Fig. 1 in dem geschlossenen Zustand. Zu erkennen ist hierbei, dass die Haltestege 30.1, 30.2 im Bereich ihrer Verbindung miteinander eine größere Erstreckung oder Verdickung in Längsrichtung aufweisen als in einem Bereich, in dem die Greifabschnitte 33.1, 33.2 an die Haltestege 30.1, 30.2 angeformt sind.

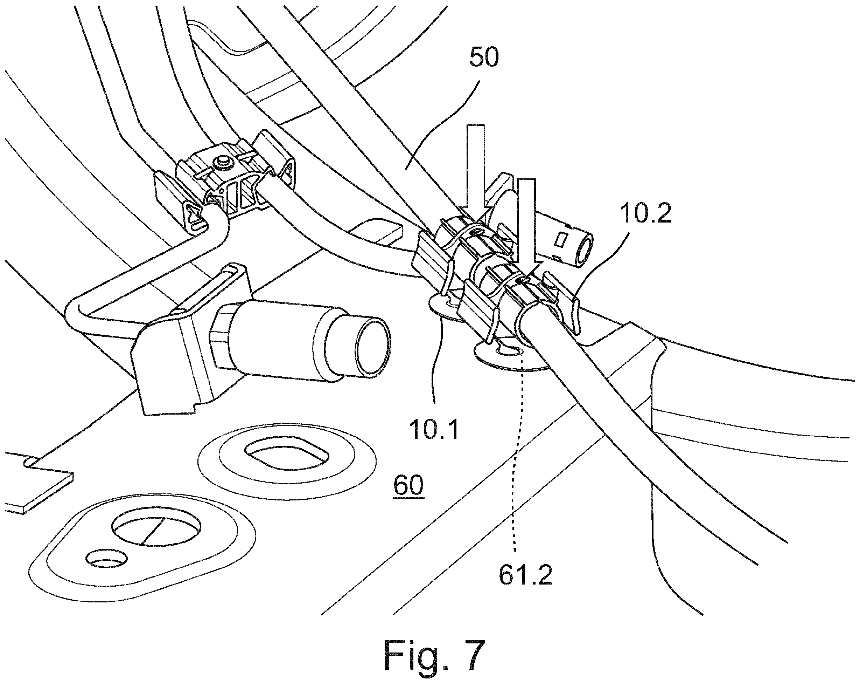

Fig. 7 zeigt eine perspektivische Seitenansicht einer Montage eines Seiles 50 einer erfindungsgemäßen Feststellbremse mittels zwei Montageklammern 10.1, 10.2 gemäß Fig. 1 an einem als Verbundlenkerachse ausgebildeten Bauteil 60 eines erfindungsgemäßen Fahrzeuges. Die Montageklammern 10.1, 10.2 sind mit ihren Befestigungsmitteln 40 jeweils in als Montagelöchern ausgebildeten Montageöffnungen 61 des Bauteiles 60 befestigt, wobei die Montageöffnungen 61 in dieser Figur nicht sichtbar sind, da sie durch die Befestigungsplatten 41 der Montageklammern 10.1, 10.2 verdeckt werden. Die Montageöffnung 61.2 ist gestrichelt angedeutet. Die Montagerichtungen der Montageklammern 10.1, 10.2 sind durch Pfeile angedeutet. Bei der Montage wurden die Montageklammern 10.1, 10.2 mit einer Bewegung in Montagerichtung hin zu den Montageöffnungen 61 bewegt, wobei das Seil in den Aufnahmehülsen 20 der Montageklammern 10.1, 10.2 aufgenommen wurde und die Befestigungselemente 40 mit ihren Befestigungshaken 43.1, 43.2 in den Montageöffnungen 61 befestigt wurden. Bei Befestigung der Befestigungselemente in den Montageöffnungen 61 werden die Aufnahmehülsenabschnitte 22.1, 22.2 durch Zusammendrücken der Montageklammer 10 an den Greifabschnitten 33.1, 33.2 aufeinander zu geschwenkt. Die Aufnahmehülse 20 wird dadurch von dem offenen Zustand in dem Herstellungszustand in einen geschlossenen Zustand in einem Montagezustand überführt. Dadurch kann das Seil nicht mehr aus der Aufnahmehülse 20 entweichen und ist sicher an dem Bauteil 60 mittelbar befestigt. Dabei werden die bereits in Eingriff mit dem Bauteil 60 gebrachten Befestigungsmittel 40, insbesondere die Überstände 46 und die Stufen 47, entlang des Bauteiles 60 verschoben.

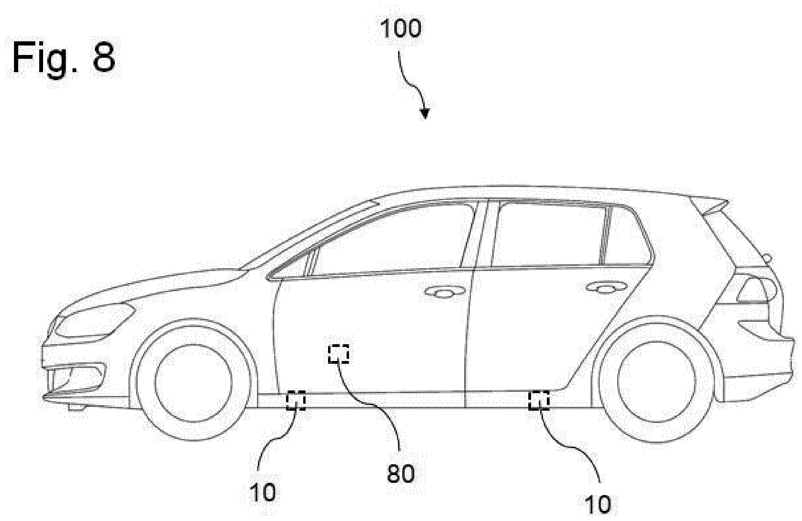

Fig. 8 zeigt schematisch ein Kraftfahrzeug 100 mit einer erfindungsgemäßen Feststellbremse 80, welche Montageklammern 10 aufweist.

### Bezugszeichenliste

- 10: Montageklammer
- 11: erster Zwischenraum
- 12: zweiter Zwischenraum
- 20: Aufnahmehülse
- 21: Aufnahmeöffnung
- 22: Aufnahmehülsenabschnitt
- 23: erster Spalt
- 24: zweiter Spalt
- 30: Haltesteg
- 31: Endabschnitt
- 32: Verbindungsabschnitt
- 33: Greifabschnitt
- 40: Befestigungsmittel
- 41: Befestigungsplatte
- 42: Befestigungsplattensegment
- 43: Befestigungshaken
- 44: Befestigungsarm
- 45: Befestigungsflügel
- 46: Überstand
- 47: Stufe
- 50: Seil
- 60: Bauteil
- 61: Montageöffnung
- 80: Feststellbremse
- 100: Kraftfahrzeug

- A: Schwenkachse
- B: Breite
- H: Höhe
- L: Längsachse der Aufnahmehülse
- S: Symmetrieachse der Montageklammer

## Patentansprüche

1. Montageklammer (10) zur mittelbaren Befestigung eines Seiles (50) einer Feststellbremse (80) an einem Bauteil (60) eines Kraftfahrzeuges (100), wobei die Montageklammer (10) aufweist:
(a) eine Aufnahmehülse (20) mit einer Aufnahmeöffnung (21) zum Aufnehmen des Seiles (50) und einer Längserstreckung entlang einer Längsachse (L) der Aufnahmehülse (20),
(b) ein Befestigungsmittel (40) zur unmittelbaren Befestigung der Montageklammer (10) in einer Montageöffnung (61) des Bauteiles (60), wobei das Befestigungsmittel (40) sich quer zu der Längsachse (L) der Aufnahmehülse (20) erstreckt, **gekennzeichnet durch**
(c) zwei flexible Haltestege (30.1, 30.2) mit jeweils einem Endabschnitt (31.1, 31.2), der mit dem Befestigungsmittel (40) verbunden ist, und jeweils einem Verbindungsabschnitt (32.1, 32.2), der mit der Aufnahmehülse (20) verbunden ist, wobei die Haltestege (30.1, 30.2) zwischen den Endabschnitten (31.1, 31.2) und den Verbindungsabschnitten (32.1, 32.2) gewölbt sind und sich quer zu der Längsachse (L) der Aufnahmehülse (20) erstrecken.

2. Montageklammer (10) nach Anspruch 1,
**dadurch gekennzeichnet,**
**dass** zwischen der Aufnahmehülse (20), dem Befestigungsmittel (40) und den Haltestegen (30.1, 30.2) ein flexibler erster Zwischenraum (11) ausgebildet ist, wobei der erste Zwischenraum (11) insbesondere eine V-Form, U-Form oder Herzform aufweist.

3. Montageklammer (10) nach Anspruch 1 oder 2,
**dadurch gekennzeichnet,**
die zwei Haltestege (30.1, 30.2) sich von den Verbindungsabschnitten (32.1, 32.2), insbesondere entlang der Aufnahmehülse (20), um die Aufnahmehülse (20) herum erstrecken und miteinander verbunden sind.

4. Montageklammer (10) nach einem der voranstehenden Ansprüche,
**dadurch gekennzeichnet,**
**dass** zumindest einer der Haltestege (30.1, 30.2) einen daran angeordneten Greifabschnitt (33.1, 33.2) aufweist, wobei der Greifabschnitt (33.1, 33.2) sich in zumindest eine Längsrichtung entlang der Längsachse (L) der Aufnahmehülse (20) über den Haltesteg (30.1, 30.2) hinaus erstreckt.

5. Montageklammer (10) nach einem der voranstehenden Ansprüche,
**dadurch gekennzeichnet,**
**dass** das Befestigungsmittel (40) eine Befestigungsplatte (41) aufweist, wobei die Befestigungsplatte (41) in zwei separate Befestigungsplattensegmente (42.1, 42.2) aufgeteilt ist, wobei je einer der ersten Endabschnitte (31.1, 31.2) mit einem der Befestigungsplattensegmente (42.1, 42.2) verbunden ist.

6. Montageklammer (10) nach einem der voranstehenden Ansprüche,
**dadurch gekennzeichnet,**
**dass** das Befestigungsmittel (40) zwei separate Befestigungshaken (43.1, 43.2) aufweist, wobei die Befestigungshaken (43.1, 43.2) je einen Befestigungsarm (44.1, 44.2) aufweisen und an freien Enden des Befestigungsarmes (44.1, 44.2) ein Befestigungsflügel (45.1, 45.2) angeordnet ist.

7. Montageklammer (10) nach Anspruch 6,
**dadurch gekennzeichnet,**
**dass** freie Enden der Befestigungsflügel (45.1, 45.2) stufenförmig mit zumindest zwei Stufen (47.1, 47.2, 47.3, 47.4, 47.5, 47.6) ausgebildet sind.

8. Montageklammer (10) nach einem der voranstehenden Ansprüche,
**dadurch gekennzeichnet,**
**dass** die Aufnahmehülse (20) in einem unbelasteten Zustand geöffnet ist.

9. Montageklammer (10) nach Anspruch 8,
**dadurch gekennzeichnet,**
**dass** die Aufnahmehülse (20) einen ersten Spalt (23) als Öffnung aufweist, der in eine Längsrichtung entlang der Längsachse (L) der Aufnahmehülse (20) verläuft und die Aufnahmehülse (20) in zwei Aufnahmehülsenabschnitte (22.1, 22.2) aufteilt, die um eine Schwenkachse (A) der Montageklammer (10) aufeinander zu schwenkbar sind, um den ersten Spalt (23) zu verkleinern oder zu schließen.

10. Montageklammer (10) nach Anspruch 9,
**dadurch gekennzeichnet,**
**dass** das Befestigungsmittel (40) zusammen mit den Aufnahmehülsenabschnitten (22.1, 22.2) um die Schwenkachse (A) schwenkbar ist.

11. Montageklammer (10) nach einem der Ansprüche 9 bis 10,
**dadurch gekennzeichnet,**
**dass** die Aufnahmehülse (20) einen zweiten Spalt (24) aufweist, der in eine Längsrichtung entlang der Längsachse (L) der Aufnahmehülse (20) verläuft und insbesondere gegenüber von dem ersten Spalt (23) ausgebildet ist.

12. Montageklammer (10) nach Anspruch 11,
**dadurch gekennzeichnet,**
**dass** ein zweiter Zwischenraum (12) zwischen der Aufnahmehülse (20), dem zweiten Spalt (24) und den Haltestegen (30.1, 30.2) ausgebildet ist, wobei der zweite Zwischenraum (12) insbesondere eine ovale Form aufweist.

13. Montageklammer (10) nach einem der voranstehenden Ansprüche,
**dadurch gekennzeichnet,**
**dass** die Montageklammer (10) einen schlagzähmodifizierten Kunststoff, insbesondere ein schlagzähmodifiziertes Polyamid, aufweist.

14. Feststellbremse (80) für ein Kraftfahrzeug (100) mit einer Feststellvorrichtung, einem mit der Feststellvorrichtung wirkverbundenen Seil (50), einer mit dem Seil (50) wirkverbundenen Bremsbacke einer Bremse an einem Rad des Kraftfahrzeuges (100), einem Bauteil (60) des Kraftfahrzeuges (100) und zumindest einer Montageklammer (10) nach einem der voranstehenden Ansprüche, wobei das Seil (50) in der Aufnahmeöffnung (21) der Aufnahmehülse (20) der zumindest einen Montageklammer (10) aufgenommen ist und das Befestigungsmittel (40) der zumindest einen Montageklammer (10) in einer Montageöffnung (61) des Bauteiles (60) unmittelbar befestigt ist, sodass das Seil (50) mittelbar an dem Bauteil (60) befestigt ist.

15. Kraftfahrzeug (100) mit einer Feststellbremse (80) nach Anspruch 14.

## Claims

1. Mounting bracket (10) for indirect fastening of a cable (50) of a parking brake (80) to a component (60) of a motor vehicle (100), the mounting bracket (10) having:
(a) a receiving sleeve (20) with a receiving opening (21) for receiving the cable (50) and a longitudinal extent along the longitudinal axis (L) of the receiving sleeve (20),
(b) a fastening means (40) for indirect fastening of the mounting bracket (10) in a mounting opening (61) of the component (60), the fastening means (40) extending transversely with respect to the longitudinal axis (L) of the receiving sleeve (20), **characterized by**
(c) to flexible holding webs (30.1, 30.2) each with an end portion (31.1, 31.2) which is connected to the fastening means (40), and each with a connecting portion (32.1, 32.2) which is connected to the receiving sleeve (20), the holding webs (30.1, 30.2) being curved between the end portions (31.1, 31.2) and the connecting portions (32.1, 32.2), and extending transversely with respect to the longitudinal axis (L) of the receiving sleeve (20).

2. Mounting bracket (10) according to Claim 1,
**characterized**
**in that** a flexible first intermediate space (11) is configured between the receiving sleeve (20), the fastening means (40) and the holding webs (30.1, 30.2), the first intermediate space (11) having, in particular, a V-shape, U-shape or heart shape.

3. Mounting bracket (10) according to Claim 1 or 2,
**characterized**
**in that** the two holding webs (30.1, 30.2) extend around the receiving sleeve (20) from the connecting portions (32.1, 32.2), in particular along the receiving sleeve (20), and are connected to one another.

4. Mounting bracket (10) according to one of the preceding claims,
**characterized**
**in that** at least one of the holding webs (30.1, 30.2) has a gripping portion (33.1, 33.2) which is arranged on it, the gripping portion (33.1, 33.2) extending beyond the holding web (30.1, 30.2) in at least one longitudinal direction along the longitudinal axis (L) of the receiving sleeve (20).

5. Mounting bracket (10) according to one of the preceding claims,
**characterized**
**in that** the fastening means (40) has a fastening plate (41), the fastening plate (41) being divided into two separate fastening plate segments (42.1, 42.2), in each case one of the first end portions (31.1, 31.2) being connected to one of the fastening plate segments (42.1, 42.2) .

6. Mounting bracket (10) according to one of the preceding claims,
**characterized**
**in that** the fastening means (40) has two separate fastening hooks (43.1, 43.2), the fastening hooks (43.1, 43.2) each having a fastening arm (44.1, 44.2), and a fastening vane (45.1, 45.2) being arranged at free ends of the fastening arm (44.1, 44.2).

7. Mounting bracket (10) according to Claim 6,
**characterized**
**in that** free ends of the fastening vanes (45.1, 45.2) are of stepped configuration with at least two steps (47.1, 47.2, 47.3, 47.4, 47.5, 47.6).

8. Mounting bracket (10) according to one of the preceding claims,
**characterized**
**in that** the receiving sleeve (20) is open in an unloaded state.

9. Mounting bracket (10) according to Claim 8,
**characterized**
**in that** the receiving sleeve (20) has a first gap (23) as opening which runs in a longitudinal direction along the longitudinal axis (L) of the receiving sleeve (20) and divides the receiving sleeve (20) into two receiving sleeve portions (22.1, 22.2) which can be pivoted toward one another about a pivot axis (A) of the mounting bracket (10), in order to decrease or to close the first gap (23) .

10. Mounting bracket (10) according to Claim 9,
**characterized**
**in that** the fastening means (40) can be pivoted together with the receiving sleeve portions (22.1, 22.2) about the pivot axis (A).

11. Mounting bracket (10) according to either of Claims 9 or 10,
**characterized**
**in that** the receiving sleeve (20) has a second gap (24) which runs in a longitudinal direction along the longitudinal axis (L) of the receiving sleeve (20) and is configured, in particular, opposite the first gap (23) .

12. Mounting bracket (10) according to Claim 11,
**characterized**
**in that** a second intermediate space (12) is configured between the receiving sleeve (20), the second gap (24) and the holding webs (30.1, 30.2), the second intermediate space (12) having, in particular, an oval shape.

13. Mounting bracket (10) according to one of the preceding claims,
**characterized**
**in that** the mounting bracket (10) comprises an impact-modified plastic, in particular an impact-modified polyamide.

14. Parking brake (80) for a motor vehicle (100) with a locking apparatus, a cable (50) which is operatively connected to the locking apparatus, a brake shoe, operatively connected to the cable (50), of a brake at a wheel of the motor vehicle (100), a component (60) of the motor vehicle (100), and at least one mounting bracket (10) according to one of the preceding claims, the cable (50) being received in the receiving opening (21) of the receiving sleeve (20) of the at least one mounting bracket (10), and the fastening means (40) of the at least one mounting bracket (10) being fastened directly in a mounting opening (61) of the component (60), with the result that the cable (50) is fastened directly to the component (60).

15. Motor vehicle (100) with a parking brake (80) according to Claim 14.

## Revendications

1. Support de montage (10) pour la fixation indirecte d'un câble (50) d'un frein de stationnement (80) sur une pièce (60) d'un véhicule automobile (100), le support de montage (10) présentant :
(a) un manchon de réception (20) ayant une ouverture de réception (21) pour recevoir le câble (50) et une extension longitudinale le long d'un axe longitudinal (L) du manchon de réception (20),
(b) un moyen de fixation (40) pour la fixation directe du support de montage (10) dans une ouverture de montage (61) de la pièce (60), le moyen de fixation (40) s'étendant transversalement à l'axe longitudinal (L) du manchon de réception (20), **caractérisé par**
(c) deux barrettes de maintien flexibles (30.1, 30.2) présentant chacune une section d'extrémité (31.1, 31.2) qui est reliée au moyen de fixation (40), et chacune une section de liaison (32.1, 32.2) qui est reliée au manchon de réception (20), les barrettes de maintien (30.1, 30.2) entre les sections d'extrémité (31.1, 31.2) et les sections de liaison (32.1, 32.2) étant cintrées et s'étendant transversalement à l'axe longitudinal (L) du manchon de réception (20).

2. Support de montage (10) selon la revendication 1, **caractérisé**
**en ce qu'**un premier espace intermédiaire (11) flexible est formé entre le manchon de réception (20), le moyen de fixation (40) et les barrettes de maintien (30.1, 30.2), le premier espace intermédiaire (11) présentant notamment une forme en V, une forme en U ou une forme de cœur.

3. Support de montage (10) selon la revendication 1 ou 2,
**caractérisé**
**en ce que** les deux barrettes de maintien (30.1, 30.2) s'étendent depuis les sections de liaison (32.1, 32.2), en particulier le long du manchon de réception (20), autour du manchon de réception (20) et sont reliées entre elles.

4. Support de montage (10) selon l'une des revendications précédentes,
**caractérisé**
**en ce qu'**au moins l'une des barrettes de maintien (30.1, 30.2) présente une section de préhension (33.1, 33.2) disposée sur elle, la section de préhension (33.1, 33.2) s'étendant dans au moins une direction longitudinale le long de l'axe longitudinal (L) du manchon de réception (20) au-delà de la barrette de maintien (30.1, 30.2).

5. Support de montage (10) selon l'une des revendications précédentes,
**caractérisé**
**en ce que** le moyen de fixation (40) présente une plaque de fixation (41), la plaque de fixation (41) étant divisée en deux segments de plaque de fixation (42.1, 42.2) séparés, l'une des première sections d'extrémité (31.1, 31.2) étant reliée à l'un des segments de plaque de fixation (42.1, 42.2).

6. Support de montage (10) selon l'une des revendications précédentes,
**caractérisé**
**en ce que** le moyen de fixation (40) présente deux crochets de fixation (43.1, 43.2) séparés, les crochets de fixation (43.1, 43.2) présentant chacun un bras de fixation (44.1, 44.2) et une aile de fixation (45.1, 45.2) étant disposée aux extrémités libres du bras de fixation (44.1, 44.2).

7. Support de montage (10) selon la revendication 6,
**caractérisé**
**en ce que** les extrémités libres des ailes de fixation (45.1, 45.2) sont réalisées en forme de gradins avec au moins deux gradins (47.1, 47.2, 47.3, 47.4, 47.5, 47.6).

8. Support de montage (10) selon l'une des revendications précédentes,
**caractérisé**
**en ce que** le manchon de réception (20) est ouvert dans un état non sollicité.

9. Support de montage (10) selon la revendication 8, **caractérisé**
**en ce que** le manchon de réception (20) présente une première fente (23) en tant qu'ouverture, qui s'étend dans une direction longitudinale le long de l'axe longitudinal (L) du manchon de réception (20) et qui divise le manchon de réception (20) en deux sections de manchon de réception (22.1, 22.2) qui sont aptes à pivoter l'une vers l'autre autour d'un axe de pivotement (A) du support de montage (10) afin de réduire ou de fermer la première fente (23).

10. Support de montage (10) selon la revendication 9, **caractérisé**
**en ce que** le moyen de fixation (40), conjointement aux les sections de manchon de réception (22.1, 22.2), est apte à pivoter autour de l'axe de pivotement (A).

11. Support de montage (10) selon l'une des revendications 9 à 10,
**caractérisé**
**en ce que** le manchon de réception (20) présente une deuxième fente (24) qui s'étend dans une direction longitudinale le long de l'axe longitudinal (L) du manchon de réception (20) et qui est notamment formée à l'opposé de la première fente (23).

12. Support de montage (10) selon la revendication 11,
**caractérisé**
**en ce qu'**un deuxième espace intermédiaire (12) est formé entre le manchon de réception (20), la deuxième fente (24) et les barrettes de maintien (30.1, 30.2), le deuxième espace intermédiaire (12) présentant notamment une forme ovale.

13. Support de montage (10) selon l'une des revendications précédentes,
**caractérisé**
**en ce que** le support de montage (10) présente une matière plastique modifiée pour résister aux chocs, en particulier un polyamide modifié pour résister aux chocs.

14. Frein de stationnement (80) pour un véhicule automobile (100) comprenant un dispositif de blocage, un câble (50) en liaison active avec le dispositif de blocage, une mâchoire de frein d'un frein sur une roue du véhicule automobile (100) en liaison active avec le câble (50), un pièce (60) du véhicule automobile (100) et au moins un support de montage (10) selon l'une des revendications précédentes, dans lequel le câble (50) est reçu dans l'ouverture de réception (21) du manchon de réception (20) dudit au moins un support de montage (10) et le moyen de fixation (40) dudit au moins un support de montage (10) est fixé directement dans une ouverture de montage (61) de la pièce (60), de sorte que le câble (50) est fixé indirectement à la pièce (60).

15. Véhicule automobile (100) équipé d'un frein de stationnement (80) selon la revendication 14.
